# FASCICULE DE BREVET EUROPEEN

(11) **EP 0 353 125 B1**
(45) Date de publication et mention de la délivrance du brevet: **15.09.1993**
(21) Numéro de dépôt: 89402034.6
(22) Date de dépôt: 18.07.1989
(51) Int. Cl.: B60T 7/12, B60T 13/16, B60T 13/68, B62D 1/26, B62D 5/06

(54) **Dispositif de double commande d'un circuit hydraulique, notamment pour une installation de freinage ou une direction assistée de véhicule automobile**
Doppelsteuervorrichtung eines Hydraulikkreises, insbesondere für eine Bremsanlage oder eine Servolenkung eines Kraftfahrzeuges
Double control device for a hydraulic circuit, especially for a brake system or power steering of an automotive vehicle

(30) Priorité: 20.07.1988 FR 8810084
(43) Date de publication de la demande: 31.01.1990
(73) Titulaire: AUTOMOBILES PEUGEOT, 75116 Paris (FR); AUTOMOBILES CITROEN, 92200 Neuilly-sur-Seine (FR)
(72) Inventeur: Dore, Jacques Pierre, F-92700 Colombes (FR)
(74) Mandataire: Boivin, Claude

(56) Documents cités:
- EP-A- 0 230 213
- FR-A- 2 395 872
- US-A- 4 574 908

## Description

Sur un véhicule automobile, le freinage est actionné par le conducteur par l'intermédiaire d'une pédale qui agit soit directement sur une pompe volumétrique (maître cylindre), avec ou sans dispositif d'assistance, soit sur un régulateur de pression, une source auxiliaire de pression étant disponible sur le véhicule.

Il en résulte, à la sortie de l'organe de commande, une pression de fluide qui est fonction de l'effort donné par le conducteur sur la pédale de frein.

Dans certaines circonstances, il peut être nécessaire d'actionner les freins du véhicule sans que le conducteur agisse lui-même sur la pédale de frein (par exemple pour éviter un patinage intempestif de roue ou réaliser un freinage d'urgence pour éviter une collision).

Il est cependant impératif que le conducteur ne perde pas dans ces conditions le contrôle du dispositif de freinage et qu'il lui soit possible de donner un effort de freinage supérieur à celui déclenché automatiquement.

Il est possible de disposer un actionneur agissant directement sur la pédale de frein, mais un tel dispositif faisant fonctionner le frein par sa commande habituelle ne s'affranchit pas d'une défaillance de cette commande.

La présente invention a pour objet un dispositif de commande d'un circuit hydraulique qui est utilisable notamment pour assurer le freinage d'un véhicule automobile auquel cas il permet d'obtenir un freinage de secours à partir d'une source ou réserve de pression auxiliaire indépendamment du freinage principal et autorise simultanément une action du conducteur sur le freinage.

Le dispositif de commande comprend un circuit d'alimentation principal des organes à actionner, des moyens électroniques de détection d'anomalies ou de proximité d'obstacles fournissant un signal électrique commandant une électrovanne disposée sur un circuit auxiliaire de commande et une vanne normalement ouverte et disposée sur ledit circuit d'alimentation. Un dispositif de ce genre est décrit dans le document EP-A- 0 230 213.

Il est caractérisé en ce que l'électrovanne est susceptible d'alimenter le circuit auxiliaire de commande normalement fermé par la vanne, cette vanne étant commandée par la pression délivrée par l'électrovanne de façon à fermer ledit circuit d'alimentation principal et ouvrir ledit circuit auxiliaire.

Ce dispositif de commande est utilisable non seulement dans les installations de freinage mais également dans les installations de direction assistée qui comportent un circuit auxiliaire propre à commander la direction par exemple dans un virage ou en présence d'un obstacle.

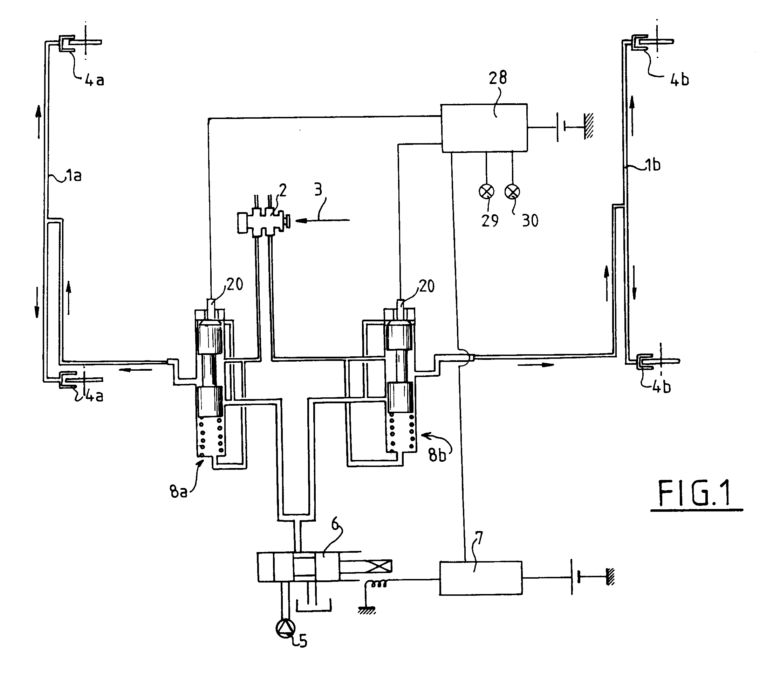

On a décrit ci-après, à titre d'exemples non limitatifs, diverses installations comportant le dispositif de commande selon l'invention, avec référence aux dessins annexés dans lesquels :
La Figure 1 montre une installation de freinage d'un véhicule automobile comportant ce dispositif de double commande;
La Figure 2 est une vue en coupe de la vanne de ce dispositif de commande;
La Figure 3 est une vue en coupe montrant un détail d'une variante de vanne;
La Figure 4 montre une commande de direction assistée comportant le dispositif de commande selon l'invention;
La Figure 5 montre une variante de double commande selon l'invention;
A la Figure 1, on voit une installation de freinage de véhicule automobile qui comprend deux circuits indépendants 1a et 1b propres à relier un dispositif de commande 2 actionné par une pédale schématisée en 3, respectivement aux freins avant 4a et aux freins arrière 4b. Ces freins peuvent également être alimentés par un circuit auxiliaire comprenant une source de pression 5 et une électro-vanne 6 commandée par des moyens électroniques 7 de détection d'anomalies et/ou de proximité d'obstacles. Sur chacun des circuits 1a et 1b est interposée une vanne 8a ou 8b par ailleurs reliée à l'électrovanne 6.

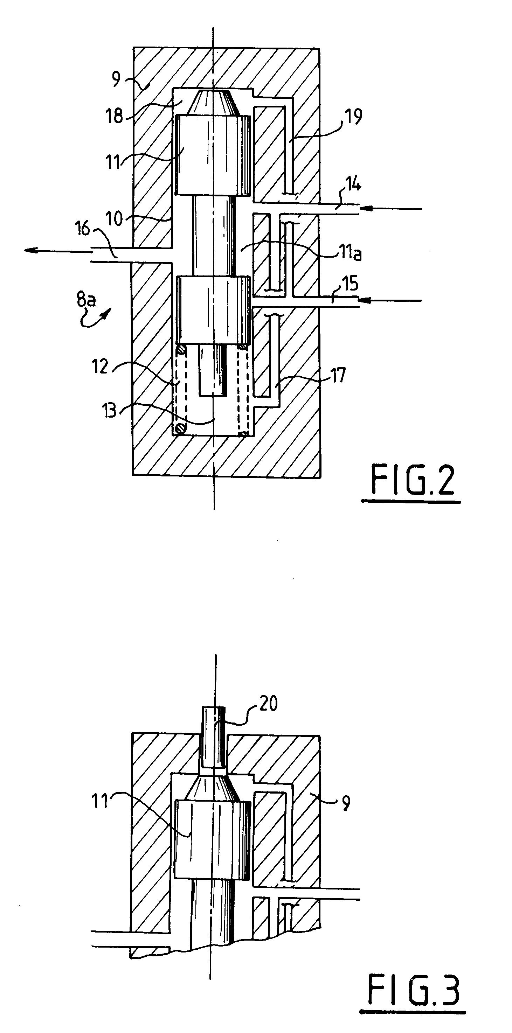

Comme on le voit plus particulièrement à la Figure 2, chacune des vannes 8a et 8b comprend un corps 9 comportant un alésage 10 dans lequel peut coulisser un tiroir 11. Un ressort 12 disposé dans une chambre d'extrémité 13 de l'alésage 10 tend à maintenir le tiroir en butée à l'extrémité opposée de cet alésage. Dans l'alésage 10 débouchent un conduit 14, relié au dispositif de commande 2, un conduit 15 relie à l'électro-vanne 6, et un conduit 16 relié aux freins 4a ou 4b. Le tiroir 11 présente une gorge annulaire 11a reliant les conduits 14 et 16 l'un à l'autre en position de repos du tiroir. La chambre 13 est reliée par un conduit 17 au conduit 14 de sorte que la pression dans ce conduit tend à pousser le tiroir dans le même sens que le ressort 12; la seconde chambre d'extrémité 18 est reliée par un conduit 19 au conduit 15 de sorte que la pression dans ce conduit tend à pousser le tiroir à l'encontre du ressort 12.

En fonctionnement normal, le tiroir 11, poussé par le ressort 12, est en butée à une extrémité de l'alésage 2. De cette façon, le fluide de commande des freins peut passer directement du conduit d'alimentation 14 à celui d'utilisation 16. Le conduit 15 est obturé par le tiroir. Lors de l'actionnement des freins par le conducteur, la pression régnant dans le dispositif agit sur le tiroir 11 sur son extrémité disposée dans la chambre 13, par l'intermédiaire du conduit 17, de façon à éviter tout déplacement intempestif du tiroir 11 ou éventuellement à le ramener dans sa position de butée en cas de dureté de coulissement dans son alésage ou de rupture du ressort 12. La sécurité du freinage principal est ainsi assurée.

Si, alors que le conducteur n'actionne pas la commande principale de freinage, un signal est envoyé par le dispositif électronique 7 à l'électro-vanne 6, celle-ci délivre une pression dans le conduit 15, cette pression est amenée dans la chambre 18 par le conduit 19 et, pour une valeur donnée fonction de l'effort du ressort 12, pousse le tiroir 11, ce qui a pour effet d'obturer l'arrivée du conduit 14 et de permettre la communication entre les conduits 15 et 16, donc d'alimenter les circuits de freinage à partir du circuit d'alimentation auxiliaire.

On notera que l'effort donné par le ressort 12 peut être faible, puisque son but est uniquement de placer le tiroir 11 dans la position d'ouverture du conduit 14 en l'absence de toute pression dans la vanne. La pression à exercer en 15 pour déplacer le tiroir 11 peut être faible et il sera alors possible d'éffectuer un freinage léger.

Si, alors que le dispositif de commande auxiliaire assure un freinage, le conducteur décide d'actionner la commande de frein principale, il envoie dans le conduit 14 une pression qui est transmise dans la chambre 13 par le conduit 17.

Si la pression fournie par le conducteur est sensiblement égale, du fait de l'effort exercé par le par le ressort 12 sur le tiroir 11, à celle fournie par le dispositif de commande auxiliaire, le tiroir 11 se déplace et rétablit la communication entre l'alimentation principale 14 et le circuit de freinage 16.

Inversement, si le dispositif de commande auxiliaire commande un freinage plus énergique que celui du conducteur, le tiroir 11 rétablit la communication entre le conduit 15 et le circuit de freinage 16.

Les pressions dans les chambres 13 et 18 sont régulées; lorsque le tiroir 11 se déplace, le fluide qui est contenu dans ces chambres peut retourner par les conduits 17 et 19, respectivement vers les conduits 14 et 15, donc à la source de régulation de pression. On évite ainsi un blocage hydraulique du tiroir 11.

Un tel dispositif est parfaitement compatible avec un système anti-bloqueur dont le rôle est de relâcher la pression dans les freins du véhicule si une roue a tendance à se bloquer.

En effet, le dispositif étant placé en aval de l'arrivée de pression régulée commandant le freinage et en amont du dispositif d'anti-blocage de la roue, le système anti-bloqueur peut accomplir son office qu'il soit alimenté par le circuit principal de freinage ou bien par le circuit auxiliaire de freinage.

Pour une question de sécurité, il peut être intéressant d'être assuré que le tiroir 11 est correctement placé en l'absence ou en présence de pression dans la vanne.

Pour ce faire, il est possible de placer sur le corps 9 un contacteur à toucheau venant palper la position effective du tiroir. Ce système a l'inconvénient cependant, par le ressort incorporé au contacteur, de modifier l'équilibre du tiroir 11.

Il est préférable de disposer dans le corps 9 un détecteur de proximité 20 (Figure 3), par exemple à effet Hall, qui indiquera la position du tiroir au dispositif auxiliaire de freinage.

Le signal recueilli par le détecteur de proximité 20 peut être transmis par exemple à un dispositif électronique 28 à microprocesseur qui assurera par exemple :
- en cas de position anormale du tiroir 11, l'alerte du conducteur par un voyant 29,
- l'avertissement du conducteur du déclenchement du circuit auxiliaire de freinage par un voyant 30,
- la coupure du circuit de commande du circuit auxiliaire lorsque le conducteur réactionne le circuit principal de freinage.

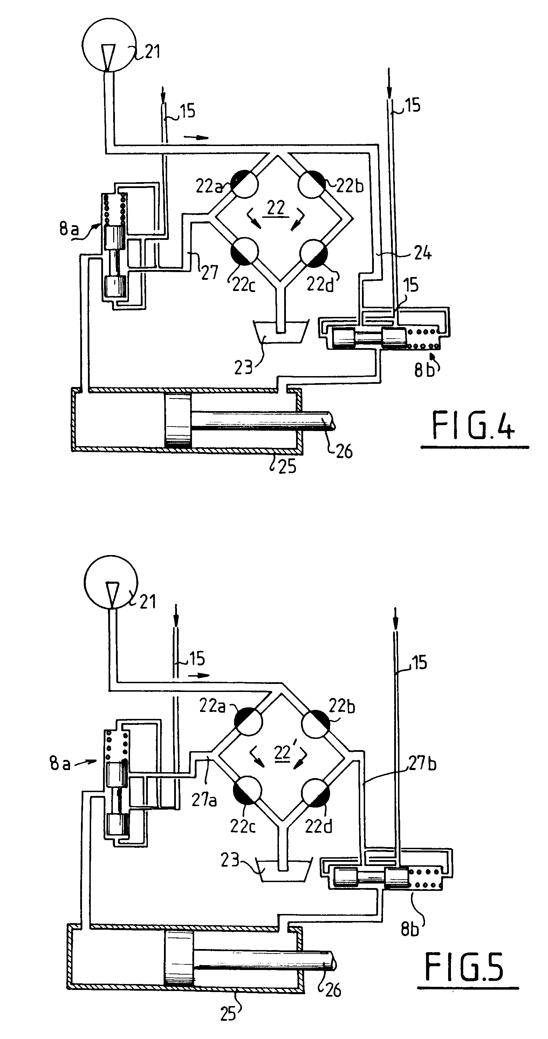

A la Figure 4, on voit une commande de direction assistée de véhicule automobile de type "centre ouvert". Cette commande comprend une pompe 21 débitant dans une valve à trois voies 22 qui au repos laisse retourner directement le fluide de commande dans le réservoir 23. La pompe 21 est reliée par un conduit 24 à la petite section d'un vérin différentiel 25, la tige du piston 26 de ce vérin étant reliée à la direction, par exemple à la crémaillère de celle-ci; de son côté, la valve 22 est reliée par un conduit 27 à la grande section du vérin 25. La valve 22 comporte quatre clapets internes 22a, 22b, 22c et 22d qui sont commandés par le volant de direction. Lorsqu'on actionne ce volant dans un premier sens les clapets 22c et 22b par exemple étranglent le circuit de retour au réservoir 23 de sorte qu'on obtient une certaine pression en aval de la pompe. Cette pression est dirigée vers les deux chambres du vérin 25 dont le piston 26 se déplace sous l'action de la pression résultante entre la chambre de grande section et celle de petite section. Par ailleurs, si l'on actionne le volant dans l'autre sens, les clapets 22a et 22d régulent la pression vers la chambre de petite section du vérin, de façon à obtenir un déplacement de la tige de piston 26 dans l'autre sens.

Selon l'invention, une vanne 8a ou 8b analogue à la vanne 8 précédemment décrite est interposée sur chacun des conduits 24 et 27, chacune de ces vannes ayant leur conduit 15 reliés à l'arrivée de pression de la commande auxiliaire.

En l'absence d'action du conducteur, si une pression fournie par la commande auxiliaire est envoyée à la vanne 8a ou 8b, le tiroir correspondant se déplace et permet à cette pression d'arriver à la chambre correspondante du vérin 25.

La commande auxiliaire peut prendre en compte la section de vérin dans la chambre alimentée pour fournir une pression correspondant à l'effort désiré pour déplacer la direction.

Si le conducteur désire reprendre le contrôle de sa direction, il lui suffit d'agir sur le volant et d'exercer un effort suffisant pour que la pression générée par la pompe 21 soit supérieure à celle fournie par la commande auxiliaire.

La commande auxiliaire n'étant destinée a agir qu'en roulage, alors que les efforts de direction sont faibles, la pression maximale qu'elle fournit peut être faible, si bien que l'effort à fournir par le conducteur pour reprendre le contrôle de sa direction reste très limité.

La Figure 5 montre une commande assistée de direction analogue mais dans laquelle la valve à trois voies 22 est remplacée par une vanne à quatre voies 22′, cette valve étant reliée aux deux chambres du vérin 25 par des conduits 27a et 27b.

Lorsqu'on manoeuvre le volant de direction, les clapets 22c et 22d étranglent le circuit de façon à obtenir une pression en aval de la pompe et les clapets 22a et 22b dirigent la pression dans l'une des chambres du vérin ou dans l'autre de façon que la tige de piston 26 se déplace dans le sens voulu. Les vannes 8a et 8b sont interposées sur les conduits 27a et 27b. Le fonctionnement de ces vannes est analogue à celui décrit pour le mode de realisation de la Figure 4.

## Revendications

1. Dispositif de commande d'un circuit hydraulique qui comprend un circuit d'alimentation principal (1a, 1b, 2, 3), des organes à actionner (4a, 4b ou 25), et des moyens électroniques (7) de détection par exemple d'anomalies et/ou de proximité d'obstacles fournissant un signal électrique commandant une électro-vanne (6) disposée sur un circuit auxiliaire de commande (15), et une vanne (8a ou 8b) normalement ouverte et disposée sur ledit circuit d'alimentation, principal, caractérisé en ce que l'électro-vanne (6) est susceptible d'alimenter le circuit auxiliaire (15) normalement fermé par la vanne (8a ou 8b), cette vanne étant commandée par la pression délivrée par l'électro-vanne (6) de façon à fermer ledit circuit d'alimentation principal et ouvrir ledit circuit auxiliaire (15).

2. Dispositif selon la revendication 1, caractérisé en ce que des moyens (3) commandés par le conducteur sont prévus pour agir sur la vanne (8a ou 8b) à l'encontre de la pression délivrée par l'électrovanne (6).

3. Dispositif selon la revendication 1 ou 2, caractérisé en ce que la vanne (8a ou 8b) comprend un tiroir (11) monté coulissant dans un alésage (1a) d'un corps (9), muni d'une gorge (11a) reliant en position de repos les conduits (14 et 16) du circuit d'alimentation principal, le tiroir étant maintenu en position de repos par un ressort (12) disposé dans une chambre (13) à une extrémité du tiroir (11), le conduit (15) du circuit auxiliaire étant obturé par le tiroir (11) en position de repos et relié par un conduit (19) à la chambre (18) disposé à l'autre extrémité du tiroir (11).

4. Dispositif selon la revendication 3, caractérisé en ce que le conduit (14) est relié à la chambre (13) par un conduit (17).

5. Dispositif selon l'une quelconque des revendications précédentes, caractérisé en ce qu'il comporte des moyens (20) pour détecter la position du tiroir (11).

6. Application du dispositif de commande selon l'une quelconque des revendications 1 à 5 à une installation de freinage comportant un double circuit de freinage.

7. Application du dispositif de commande selon l'une quelconque des revendications 1 à 5 à une direction assistée.

## Claims

1. Device for controlling a hydraulic circuit which includes one main feeding circuit (1a, 1b, 2, 3), activating devices (4a, 4b or 25), and electronic means (7) for detecting, for example, anomalies and/or nearby obstacles, said means providing an electric signal controlling an electrovalve (6) disposed on an auxiliary control circuit (15), and a valve (8a or 8b) normally open and disposed on said main feeding circuit, wherein the electrovalve (6) is able to feed the auxiliary circuit (15) normally closed by the valve (8a or 8b), said valve being controlled by the pressure delivered by the electrovalve (6) so as to close said main feeding circuit and open said auxiliary circuit (15).

2. Device according to claim 1,
wherein the means (3) controlled by the driver are provided to act on the valve (8a or 8b) against the pressure delivered by the electrovalve (6).

3. Device according to claim 1 or 2,
wherein the valve (8a or 8b) includes a slide valve (11) mounted sliding in a bore (1a) of a body (9) provided with a throat (11a) connecting in the idle position the pipes (14 and 16) of the main feeding circuit, the slide valve being kept in the idle position by a spring (12) disposed in a chamber (13) at one extremity of the slide valve (11), the pipe. (15) of the auxiliary circuit being blocked off by the slide valve (11) in the idle position and connected by a pipe (19) to the chamber (18) disposed at the other extremity of the slide valve (11).

4. Device according to claim 3,
wherein the pipe (14) is connected to the chamber (13) by means of a pipe (17).

5. Device according to any one of the preceding claims,
wherein it comprises means (20) to detect the position of the slide valve (11).

6. Application of the control device according to any one of claims 1 to 5 to a braking system comprising a double braking circuit.

7. Application of the control device according to any one claims 1 to 5 to an assisted power steering.

## Patentansprüche

1. Steuervorrichtung eines Hydraulikkreises, die einen Hauptzuführungskreis (1a, 1b, 2, 3), Betätigungsorgane (4a, 4b oder 25) sowie elektronische Mittel (7) zur Feststellung von z.B. Unregelmäßigkeiten und/oder der Nähe von Hindernissen, wobei die elektronischen Mittel ein elektrisches Signal liefern, das ein in einem Hilfs-Steuerkreis (15) angeordnetes Elektroventil (6) steuert, und ein Ventil (8a oder 8b) umfaßt, das üblicherweise offen und im besagten Hauptzuführungskreis angeordnet ist, **dadurch gekennzeichnet**, daß das Elektroventil (6) zum Speisen des Hilfskreises (15) geeignet ist, der gewöhnlich durch das Ventil (8a oder 8b) geschlossen ist, das über den vom Elektroventil (6) abgegebenen Druck derart gesteuert wird, daß es den besagten Hauptzuführungskreis schließt und den besagten Hilfskreis (15) öffnet.

2. Vorrichtung nach Anspruch 1, dadurch gekennzeichnet, daß durch den Fahrer betätigte Mittel (3) vorgesehen sind, um auf das Ventil (8a oder 8b) entgegen dem vom Elektroventil (6) gelieferten Druck einzuwirken.

3. Vorrichtung nach Anspruch 1 oder 2, dadurch gekennzeichnet, daß das Ventil (8a oder 8b) einen Schieber (11) aufweist, der verschiebbar in eine Bohrung (1a) eines Körpers (9) eingebaut ist und mit einer Einziehung (11a) versehen ist, die in Ruhestellung die Leitungen (14 und 16) des Hauptzuführungskreises miteinander verbindet, wobei der Schieber in Ruhestellung durch eine Feder (12) gehalten ist, die in einer Kammer (13) an einem Ende des Schiebers (11) angeordnet ist, und die Leitung (15) des Hilfskreises durch den Schieber (11) in seiner Ruhestellung verschlossen und über eine Leitung (19) mit der Kammer (18), die am anderen Ende des Schiebers (11) angeordnet ist, verbunden ist.

4. Vorrichtung nach Anspruch 3, dadurch gekennzeichnet, daß die Leitung (14) mit der Kammer (13) über eine Leitung (17) verbunden ist.

5. Vorrichtung nach einem der vorhergehenden Ansprüche, dadurch gekennzeichnet, daß sie Mittel (20) zum Anzeigen der Stellung des Schiebers (11) umfaßt.

6. Anwendung der Steuervorrichtung nach einem der Ansprüche 1 bis 5 auf eine einen Doppelbremskreis aufweisende Bremsanlage.

7. Anwendung der Steuervorrichtung nach einem der Ansprüche 1 bis 5 auf eine Servolenkung.
